# FASCICULE DE BREVET EUROPEEN

(11) **EP 2 622 128 B1**
(45) Date de publication et mention de la délivrance du brevet: **02.08.2017**
(21) Numéro de dépôt: 11773085.3
(22) Date de dépôt: 14.09.2011
(51) Int. Cl.: D21C 5/00, D21C 5/02, D21C 9/00, D21D 1/20, D21H 11/12, D21H 11/20

(54) **PROCÉDÉ DE RAFFINAGE EN MILIEU ENZYMATIQUE D'UNE PÂTE PAPETIÈRE COMPORTANT DES FIBRES CELLULOSIQUES AFIN DE RÉDUIRE LEUR LONGEUR**
VERFAHREN ZUR MAHLUNG IM ENZYMATISCHEN MEDIUM VON PAPIERZELLSTOFF ENTHALTEND ZELLULOSEFASERN UM IHRE LÄNGE ZU REDUZIEREN
REFINING PROCESS IN AN ENZYMATIC MEDIUM OF A PAPER PULP COMPRISING CELLULOSIC FIBRES IN ORDER TO REDUCE THEIR LENGTH

(30) Priorité: 30.09.2010 FR 1057941
(43) Date de publication de la demande: 07.08.2013
(73) Titulaire: Arjo Wiggins Fine Papers Limited, Manchester M1 5ES (GB)
(72) Inventeur: DEPRES, Gaël, F-38850 Chirens (FR)
(74) Mandataire: Desaix, Anne
(86) Numéro de dépôt international: PCT/FR2011/052110
(87) Numéro de publication internationale: WO 2012/042146

(56) Documents cités:
- EP-A1- 0 430 915
- WO-A1-96/28606
- WO-A1-2004/022842
- WO-A2-2004/101889
- FR-A1- 2 557 894
- FR-A1- 2 910 500
- US-A1- 2006 180 285
- US-A1- 2007 119 558

## Description

La présente invention concerne un procédé de raffinage en milieu enzymatique d'une pâte papetière comportant des fibres cellulosiques afin de réduire la longueur de ces fibres, ainsi qu'un procédé de fabrication d'un papier à partir de cette pâte raffinée.

Un papier peut être fabriqué à partir d'une pâte comportant des fibres de cellulose issues de bois ou d'autres sources telles que le coton, le lin, le chanvre ou le bambou.

Les fibres cellulosiques de bois sont relativement courtes. Elles ont en effet une longueur moyenne relativement faible et les fibres les plus longues sont peu nombreuses et ne gênent en général pas la fabrication d'un papier à partir d'une pâte comportant de telles fibres.

Les fibres cellulosiques des autres sources précitées ont à l'état naturel une longueur moyenne plus importante, et les fibres les plus longues (longueur supérieure ou égale à 2mm environ) peuvent être relativement nombreuses et peuvent gêner ou empêcher la fabrication d'un papier à partir d'une pâte comportant de telles fibres. Les fibres les plus longues peuvent en effet boucher différents organes d'une machine à papier, tels que les raffineurs, les filtres sous pression, etc.

Outre la longueur des fibres qu'elles contiennent, ces sources alternatives de fibres cellulosiques peuvent présenter une distribution des longueurs desdites fibres hétérogène qui peut nuire à leur utilisation dans les machines utilisées pour raffiner les pâtes papetières ou nuire à la qualité finale du papier.

On a déjà proposé de traiter mécaniquement des fibres cellulosiques issues de sources autres que le bois, afin de réduire leur longueur et de produire des papiers à partir de ces fibres. Le pulpeur d'une machine à papier peut par exemple avoir une géométrie spécifique (du type Tornado® par exemple) pour raccourcir les fibres cellulosiques. Des moyens de pressage (du type Bivis®) peuvent également être utilisés pour raccourcir les fibres. Les fibres peuvent en outre être traitées thermiquement.

Cependant, ces différents traitements nécessitent des énergies de fonctionnement très importantes et sont donc relativement coûteux. De plus, ils doivent être utilisés pendant une durée relativement longue pour être efficaces.

Un autre traitement mécanique connu pour raccourcir les fibres d'une pâte papetière est le raffinage. Toutefois, ce traitement est également très consommateur d'énergie et est particulièrement long, ce qui augmente la durée de fabrication d'un papier et n'est donc pas économique.

Le raffinage d'une pâte à papier est un traitement mécanique visant à obtenir l'hydratation, la fibrillation ou la coupe des fibres qui la composent. Lors d'un raffinage, il y a toujours une compétition entre la fibrillation des fibres et la réduction de leur longueur. Les papetiers favorisent en général la fibrillation des fibres pour améliorer certaines caractéristiques mécaniques ou physiques des fibres ou pour améliorer l'égouttage de la pâte à papier.

En parallèle, on a déjà proposé de traiter une pâte à papier avec une solution enzymatique, avant ou après son raffinage, afin d'améliorer la fibrillation de ses fibres de bois ainsi que l'égouttage de la pâte à papier.

Le brevet FR-A1-2 557 894 décrit un procédé de traitement des pâtes papetières (de résineux) au moyen d'une solution enzymatique contenant des xylanases et ne présentant aucune activité cellulasique, de façon à réduire la cohésion interne de la paroi fibreuse des fibres. Les enzymes sont détruites puis la pâte traitée est raffinée mécaniquement. Le traitement enzymatique permet le relâchement de la structure des fibres favorisant l'effet de fibrillation lors du raffinage mécanique.

Le brevet EP-A1-0 262 040 décrit un procédé de traitement d'une pâte papetière à base de fibres recyclées par une solution enzymatique, afin d'améliorer l'égouttage de la pâte traitée. La pâte peut être préalablement raffinée pour augmenter son degré Schopper-Riegler (SR), c'est-à-dire son indice d'égouttage (plus la pâte est raffinée, plus elle retient l'eau et plus son degré SR augmente).

Le brevet FR-A1-2 910 500 décrit un procédé de fabrication d'un papier calque dans lequel une pâte papetière est traitée par une solution enzymatique, l'action enzymatique est inhibée, puis la pâte est raffinée. Le traitement enzymatique permet d'améliorer l'hydratation et la fibrillation des fibres (de résineux) lors du raffinage, ainsi que l'égouttage de la pâte à papier.

Dans la technique actuelle, le traitement enzymatique des fibres (de bois) est donc essentiellement utilisé pour améliorer, en particulier augmenter, la fibrillation des fibres lors du raffinage et/ou l'égouttage de la pâte à papier comportant ces fibres.

L'invention propose au contraire de favoriser la coupe des fibres cellulosiques d'une pâte à papier lors de son raffinage, ces fibres cellulosiques étant issues de sources autres que le bois et ayant au moins pour certaines une longueur relativement importante.

De façon inattendue, la Demanderesse a remarqué que l'effet de coupe des fibres cellulosiques était nettement amélioré lors du raffinage par le traitement enzymatique préalable et/ou simultané de la pâte à papier, comprenant l'utilisation d'une ou plusieurs enzymes hydrolysant la cellulose, l'action enzymatique étant inhibée à la fin du raffinage ou après le raffinage de cette pâte.

L'invention permet donc d'apporter une solution plus simple, plus efficace et plus économique au problème précité de raccourcissement des fibres cellulosiques de trop grande longueur issues de sources autres que le bois ou de matière recyclée, cette matière recyclée ne comportant pas de fibres cellulosiques de bois.

Plus précisément, l'invention a pour objet un procédé de raffinage en milieu enzymatique d'une pâte papetière comportant des fibres cellulosiques issues de sources autres que le bois ou issues de matière recyclée, cette pâte comportant un taux supérieur à 10%, de préférence supérieur à 20%, et plus préférentiellement supérieur ou égal à 30%, de fibres cellulosiques ayant une longueur supérieure ou égale à 2mm environ, caractérisé en ce qu'il comprend les étapes de :
- raffinage de la pâte papetière, en présence d'une solution enzymatique ajoutée ou mélangée à la pâte avant le raffinage et/ou pendant le raffinage, active sur lesdites fibres cellulosiques et comprenant une ou plusieurs enzymes hydrolysant la cellulose, de façon à accentuer et/ou accélérer lors du raffinage l'effet de coupe des fibres cellulosiques, en particulier pour réduire la longueur des fibres de plus grande longueur ;
- inhibition de l'action enzymatique dans la pâte papetière en fin de raffinage ou après le raffinage ; et
- récupération de la pâte papetière raffinée.

L'invention permet de traiter une pâte papetière comportant de longues fibres en vue de la fabrication d'un papier, ces fibres cellulosiques n'étant pas des fibres de bois qui, comme expliqué dans ce qui précède, sont relativement courtes à l'état naturel.

Dans un cas particulier de réalisation de l'invention, le procédé permet de réduire le taux de fibres cellulosiques de la pâte ayant une longueur supérieure ou égale à 2mm à moins de 5% environ, voire moins de 3% environ, voire plus préférentiellement moins de 1% environ.

Le procédé selon l'invention comporte pour l'essentiel trois étapes : une étape de raffinage en milieu enzymatique de la pâte papetière, une étape d'inhibition de l'action enzymatique dans la pâte, et une étape de récupération de la pâte raffinée.

Le procédé peut éventuellement comprendre une étape préliminaire de préparation ou d'apport de la pâte papetière (à raffiner). Cette pâte peut être réalisée en mélangeant des fibres cellulosiques, de l'eau, de la lessive de soude ou tout autre composé chimique utilisé lors de la cuisson des fibres. Les fibres cellulosiques peuvent être issues de plantes annuelles, bi-annuelles ou récoltées au moins tous les deux ans, telles que des fibres de coton, de lin, de chanvre, de riz, de bambou, de bagasse, d'abaca, de sisal, de jute, de paille, de kenaf, d'alpha, de ramie, et/ou de kapok. Elles peuvent également être des fibres recyclées ou non vierges, par exemple issues de textiles recyclés (chiffons).

La pâte papetière à traiter selon l'invention est par exemple une pâte de coton dont les fibres les plus longues ont une longueur supérieure à 2cm environ, ou une pâte de chiffon réalisée avec des textiles de coton recyclés.

L'étape de raffinage est réalisée au moyen d'un raffineur d'une machine à papier, dont les caractéristiques et/ou les paramètres de fonctionnement (tels que la concentration en fibres de la pâte, le débit d'alimentation du raffineur en pâte, etc.) sont déterminés pour favoriser la coupe des fibres (au détriment de leur fibrillation, comme expliqué dans ce qui précède).

La combinaison d'un raffinage optimisé pour favoriser la coupe des fibres avec une action enzymatique ayant pour but de détériorer ces fibres, rend le procédé selon l'invention très efficace pour réduire la longueur des fibres, en particulier celles de plus grande longueur.

Le taux de raffinage d'une pâte est caractérisé la plupart du temps par une mesure de son degré d'égouttage (degré Schopper-Riegler). Ce degré d'égouttage intègre à la fois la fibrillation et la coupe des fibres. Pour dissocier ces effets, il est courant de mesurer la distribution en longueur des fibres ou le taux des fibres les plus longues qui va permettre de juger l'effet de coupe du raffinage, et de mesurer l'hydratation des fibres par la mesure du WRV (Water Retention Value) pour caractériser la fibrillation des fibres.

Le raffineur peut être du type pile hollandaise, raffineur plan, raffineur conique, raffineur à disques, etc.

Il est commun de calculer la charge spécifique de lame ou d'arête Cs (specific edge load - SEL) en J/m ou en W.s/m pour caractériser l'effet de coupe d'un raffineur sur les fibres.

La charge spécifique de lame peut être obtenue par l'équation Cs = Pn / Ls, dans laquelle Ls est la vitesse de coupe des lames du raffineur en m/s et Pn est la puissance ou l'énergie nette du raffineur en kW. Cette énergie nette est donnée par l'équation Pn = We.m, dans laquelle We est la puissance ou l'énergie nette spécifique du raffineur en kW.h/tonne de fibres et m est le débit de fibres sèches alimentant le raffineur en tonnes/h.

Plus la charge spécifique de lame (Cs) est élevée, plus l'effet de coupe des fibres est prononcé. Un raffineur avec un Cs de 3J/m a un effet de coupe, alors qu'un raffineur avec un Cs de 1J/m a un effet fibrillant.

Le raffinage selon l'invention est donc de préférence réalisé au moyen d'un raffineur ayant une charge spécifique de lame supérieure à 1J/m, de préférence supérieure à 2J/m, et plus préférentiellement supérieure ou égale à 3J/m.

Les paramètres suivants de raffinage et de la pâte à raffiner ont une influence sur le Cs : énergie de raffinage, type de lames du raffineur, vitesse de rotation du moteur du raffineur, consistance de la pâte et débit volumétrique d'alimentation du raffineur en pâte. De plus, le nombre et la longueur des lames du raffineur, combinés à la vitesse de rotation de son moteur, déterminent la capacité des lames ou du raffineur à couper ou fibriller de manière efficace.

Pour favoriser l'effet de coupe du raffineur, on peut ajuster de la façon suivante un ou plusieurs des paramètres de fonctionnement et des caractéristiques du raffineur ci-dessous :
- augmentation de l'énergie nette spécifique du raffineur (par exemple comprise entre 50 et 800 kWh/T),
- diminution de la concentration en fibres de la pâte (par exemple comprise entre 1 et 10%, et de préférence entre 2 et 6 % en poids),
- diminution de la surface des lames du raffineur (c'est-à-dire, diminution de la largeur des lames et agrandissement des espaces inter-lames),
- diminution de l'angle des lames (par exemple comprise entre -15 et +15°),
- augmentation du tranchant des lames, et
- diminution de la vitesse de rotation périphérique du moteur du raffineur (par exemple comprise entre 15 et 35 m/s).

La solution enzymatique est ajoutée à la pâte papetière, avant le raffinage et/ou pendant le raffinage, et a notamment pour but de fragiliser les fibres cellulosiques. Ce raffinage en milieu enzymatique (le raffinage et au moins une partie de l'action enzymatique ont lieu simultanément) a un effet bénéfique inattendu sur la coupe des fibres cellulosiques et donc la réduction de leur longueur, c'est-à-dire que les fibres ont une longueur moyenne réduite après traitement et la pâte raffinée comporte peu ou pas de fibres de trop grande longueur (supérieure ou égale à 2mm environ).

Dans un cas particulier, la solution enzymatique peut être mélangée à de l'eau préalablement à l'ajout des fibres cellulosiques dans ce mélange.

La solution enzymatique comprend une ou plusieurs enzymes hydrolysant la cellulose, en particulier une ou plusieurs cellulase(s) ou hémicellulase(s).

Avantageusement, la solution enzymatique comprend de la cellulase, par exemple du type endo-1,4-β-glucanase, telle que celle commercialisée par la société Novozymes sous la référence Novozym® 476 ou FiberCare® R. La solution enzymatique peut comprendre d'autres enzymes choisies dans la famille des cellulases ou des hémicellulases.

La température de raffinage de la pâte peut être par exemple comprise entre 40 et 80°. La ou les enzyme(s) sont choisies pour leur capacité à être actives à cette température afin de permettre l'action enzymatique dans le contexte du raffinage.

La durée de raffinage est variable et peut durer entre de quelques dixièmes de seconde à plusieurs heures. Le pH de la solution enzymatique est par exemple compris entre 4 et 11.

La solution enzymatique a par exemple une quantité d'enzymes représentant moins de 5% en poids de la solution. La solution peut être ajoutée à la pâte à raison de 0,1 à 10 ml/kg de fibres. La pâte a par exemple une concentration massique (en poids sec) en fibres cellulosiques comprise entre 1 et 10%.

Une étape du procédé selon l'invention consiste à inhiber l'action enzymatique dans la pâte papetière traitée. Cette étape peut être réalisée à la fin du raffinage ou après le raffinage. Si cette étape n'est pas réalisée, l'action des enzymes continue et peut devenir incontrôlable.

Dans la présente demande, on entend par « inhibition de l'action enzymatique », le fait de diminuer et de préférence arrêter ou bloquer l'action enzymatique.

Cette étape peut comprendre ou consister à introduire une quantité d'oxydant fort, par exemple du type hypochlorite de sodium ou peroxyde d'hydrogène, dans la pâte.

Le contrôle de l'inhibition des enzymes est réalisé en introduisant une certaine quantité de filtrat de pâte raffinée (le filtrat de pâte peut être obtenu en récupérant une partie liquide de la patte raffinée par filtrage, au moyen d'un Büchner par exemple) dans une solution de carboxyméthylcellulose (CMC). Si la viscosité de ce mélange reste constante, l'enzyme a bien été inhibée. Si, au contraire, la viscosité du mélange diminue dans le temps, les enzymes sont toujours actives et dégradent les chaînes de CMC, ce qui explique cette baisse de viscosité.

Selon un mode de réalisation de l'invention, lorsque les fibres cellulosiques sont issues de matière recyclée, le procédé comprend une étape préliminaire de cuisson de la pâte papetière à traiter, en particulier sous condition alcaline. La matière recyclée peut se présenter sous forme de petits morceaux de matière, par exemple obtenus par découpage ou hachage d'un produit à recycler tel qu'un textile. La cuisson précitée permet le gonflement des fibres et leur assouplissement, la dissolution de composés indésirables, tels que l'ensimage, et également la réduction de la taille des morceaux précités, par exemple à environ 1 cm.

Alternativement ou conjointement, le raffinage peut être réalisé pendant une durée suffisante pour réduire la longueur moyenne des fibres à moins de 1 mm, et par exemple à moins de 0,7mm. Il peut être réalisé pendant une durée suffisante pour réduire le taux de fibres ayant une longueur supérieure à 2mm à moins de 3%, et par exemple à moins de 1 %.

Alternativement ou conjointement, le raffinage peut également ou en variante être réalisé pendant une durée suffisante pour réduire le taux de fibres ayant une longueur supérieure à 3mm à moins de 3%, et par exemple à moins de 1%.

Après raffinage, la pâte papetière peut avoir un taux supérieur à 30%, de préférence supérieur à 50%, et plus préférentiellement supérieur à 70%, de fibres (courtes) ayant une longueur inférieure à 1 mm environ.

Le raffinage peut être réalisé pendant une durée comprise entre 10 et 60 minutes, de préférence entre 20 et 40 minutes, plus préférentiellement entre 25 et 35 minutes, et par exemple de 30 minutes environ.

La pâte papetière raffinée est ensuite récupérée lors d'une étape supplémentaire.

La présente invention concerne également un papier, caractérisé en ce qu'il est fabriqué à partir d'une pâte papetière raffinée par le procédé tel que décrit ci-dessus. Ce papier peut être un papier imprimable ou d'écriture tel qu'un papier fin, un papier de sécurité par exemple pour billet de banque, un papier technique par exemple pour support abrasif, ou un papier d'emballage par exemple alimentaire (tel qu'un papier pour sachet de thé).

Le papier est par exemple un papier fin ayant une main supérieure ou égale à 1,10cm³/g. La pâte à papier qui est utilisée pour sa fabrication peut comprendre des fibres cellulosiques de bonne qualité, un liant, et une faible proportion de charges et/ou d'adjuvants, tels que de l'amidon.

Le papier a par exemple un indice de déchirement inférieur ou égal à 4mN.m²/g.

L'invention concerne encore l'utilisation d'une pâte papetière raffinée par un procédé du type précité pour la fabrication de papier.

L'invention sera mieux comprise et d'autres détails, caractéristiques et avantages de la présente invention apparaîtront plus clairement à la lecture de la description suivante comportant deux exemples illustrant l'invention.

### Exemple 1

Une pâte papetière comportant des fibres cellulosiques de coton effiloché a été raffinée en milieu enzymatique par le procédé selon l'invention.

Les fibres cellulosiques les plus longues ont une longueur de 2cm environ. La longueur moyenne des fibres est de 4mm environ et le taux de fibres ayant une longueur supérieure à 3mm est de 80% environ.

La pâte papetière a été préparée à une concentration de 5% massique. Une solution enzymatique comportant de la cellulase (commercialisée par la société Novozymes sous la référence Novozym® 476) a été réalisée.

Trois échantillons de pâte ont été préparés : un premier échantillon comportant une quantité d'enzyme de 2 ml/kg de fibres, un second échantillon comportant une quantité d'enzyme de 6 ml/kg de fibres, et un troisième échantillon ne comportant pas d'enzyme.

Les trois échantillons ont ensuite été raffinés à l'aide d'une pile hollandaise pendant 10, 20 ou 30 minutes.

Le pH des échantillons est de 7 environ et leur température est proche de 50°C environ.

Une quantité d'inhibiteur a été ajoutée à la fin du raffinage. La quantité d'inhibiteur (hypochlorite de sodium à 12% de chlore actif) qui a été utilisée est de 12ml/kg de fibres.

Les figures 1 à 3 représentent les résultats des tests effectués sur les échantillons précités.

La figure 1 est un graphe représentant l'évolution de la longueur moyenne (L en millimètres) des fibres cellulosiques dans chaque échantillon de pâte papetière, en fonction du temps de raffinage (T en minutes).

La figure 2 est un graphe représentant l'évolution du taux (t en %) de fibres dont la longueur est supérieure à 3mm dans chaque échantillon de pâte papetière, en fonction du temps de raffinage (T en minutes).

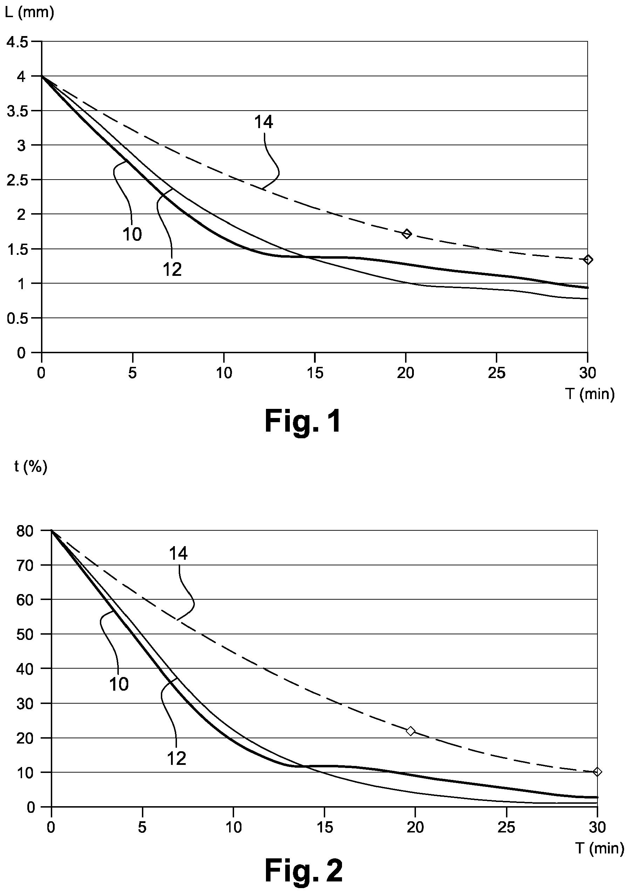

Les figures 1 et 2 comportent chacune trois courbes, les courbes 10 concernent le premier échantillon (enzyme à 2ml/kg de fibres), les courbes 12 concernent le second échantillon (enzyme à 6ml/kg de fibres), et les courbes 14 concernent le troisième échantillon (sans enzyme).

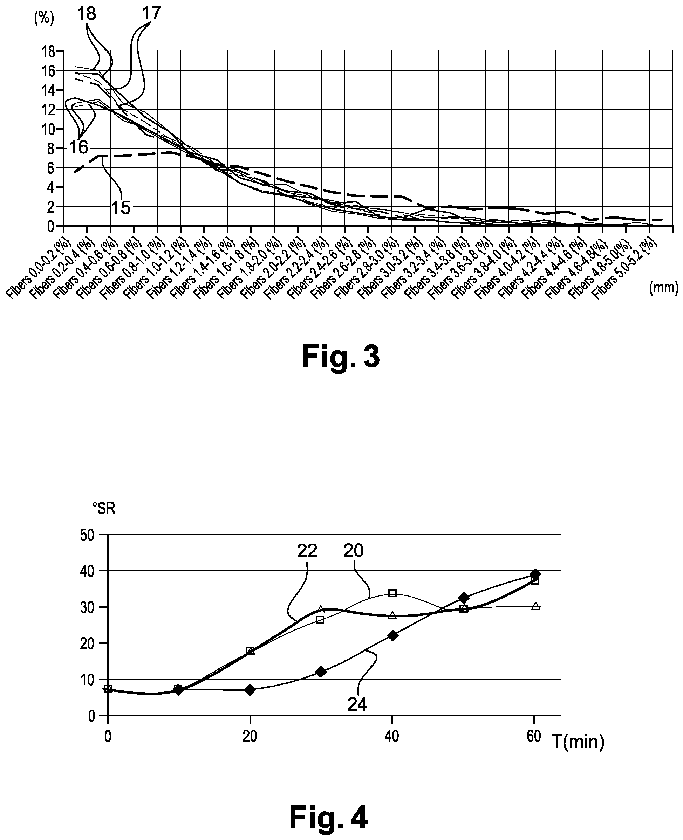

La figure 3 est un graphe représentant la distribution du taux des fibres d'une pâte papetière (%) en fonction de leur longueur (exprimée en mm - de 0 à 5,2mm), pour plusieurs durées de raffinage différentes.

La figure 1 montre qu'un raffinage de 30 minutes permet de réduire la longueur moyenne des fibres à 0,95mm dans le premier échantillon contenant 2 ml/kg d'enzyme (courbe 10), à 0,8mm dans le second échantillon contenant 6ml/kg d'enzyme (courbe 12), alors que la longueur moyenne des fibres est de 1,4mm dans le troisième échantillon sans enzyme (courbe 14).

La figure 2 montre qu'un raffinage de 30 minutes permet d'avoir un taux de fibres ayant une longueur supérieure à 3mm inférieur à 2,5% dans le premier échantillon contenant 2 ml/kg d'enzyme (courbe 10) et inférieur à 1% dans le second échantillon contenant 6ml/kg d'enzyme (courbe 12), alors qu'il est supérieur à 10 % dans le troisième échantillon sans enzyme (courbe 14).

Les pâtes papetières correspondant aux premier et second échantillons (2 et 6ml/kg d'enzyme - courbes 10 et 12) ont un taux de fibres ayant une longueur supérieure à 3mm relativement faible au bout de 30 minutes de raffinage et sont utilisables sur une machine à papier sans risque de bouchage de ses organes. Au contraire, la pâte papetière correspondant au troisième échantillon (sans enzyme - courbe 14) a un taux de fibres ayant une longueur supérieure à 3mm trop important au bout de 30 minutes de raffinage et ne peut pas être utilisée sur une machine à papier car elle risquerait de boucher ses organes.

L'invention permet donc de raccourcir des fibres cellulosiques d'une pâte papetière en un temps relativement court et d'accentuer l'effet de coupe lors du raffinage de la pâte. L'invention a également pour effet de réduire la fibrillation des fibres à une même longueur et donc d'améliorer l'égouttage de la pâte à papier sur la table de formation de la machine à papier.

Dans la figure 3, les huit courbes identifiées par les références 15, 16, 17 et 18 correspondent à des durées de raffinage d'une pâte papetière, telle que l'un des premier et second échantillons précités comportant des enzymes.

La courbe 15 représente l'évolution de la distribution en longueur des fibres de cet échantillon sans raffinage.

Les courbes 16 représentent l'évolution de cette distribution pour des durées de raffinage de 10, 20 et 30 minutes. Les courbes 17 représentent l'évolution de cette distribution pour des durées de raffinage de 40 et 50 minutes, et les courbes 18 représentent l'évolution de cette distribution pour des durées de raffinage supérieures à 50 minutes.

La figure 3 montre que plus la durée de raffinage augmente, plus le taux des fibres les plus longues (longueur supérieure à 3mm) diminue et plus le taux de fibres courtes augmente (du fait justement de la coupe des fibres les plus longues).

### Exemple 2

Des pâtes papetières du type pâte de chiffon, comportant des fibres cellulosiques issues de textiles de coton recyclés, ont été raffinées par le procédé selon l'invention.

La longueur moyenne des fibres est de 1,6mm environ et le taux des fibres les plus longues (longueur supérieure à 2mm environ) est de 31,2% environ.

Les pâtes papetières ont préalablement été cuites sous condition alcaline.

Une solution enzymatique comportant de la cellulase (commercialisée par la société Novozymes sous la référence Novozym® 476) a été ajoutée à au moins une partie des pâtes. L'enzyme est mélangée à de l'eau avant l'ajout de la pâte papetière comportant les fibres dans le mélange.

Trois pâtes papetières différentes ont été réalisées : une première pâte comportant une quantité d'enzyme de 2ml/kg de fibres, une seconde pâte comportant une quantité d'enzyme de 4,7ml/kg de fibres, et une troisième pâte ne comportant pas d'enzyme.

Les trois pâtes sont ensuite raffinées à l'aide d'une pile hollandaise, à une concentration de 20g/l. La température de chaque pâte lors du raffinage est de 50°C environ et le pH a été réglé à 7 environ.

Des prélèvements sont effectués dans les différentes pâtes papetières toutes les 10 minutes lors du raffinage. L'enzyme est inhibé dans chaque prélèvement à l'aide d'une solution d'hypochlorite de sodium à 12,5% de chlore actif, à hauteur de 600% par rapport à l'enzyme.

Des mesures du degré Schopper-Riegler (°SR) et de la longueur des fibres sont effectuées dans chaque prélèvement et sont représentées par les figures 4 à 6.

La figure 4 est un graphe représentant l'évolution du degré SR (°SR) de chaque pâte papetière, en fonction du temps de raffinage (T en minutes).

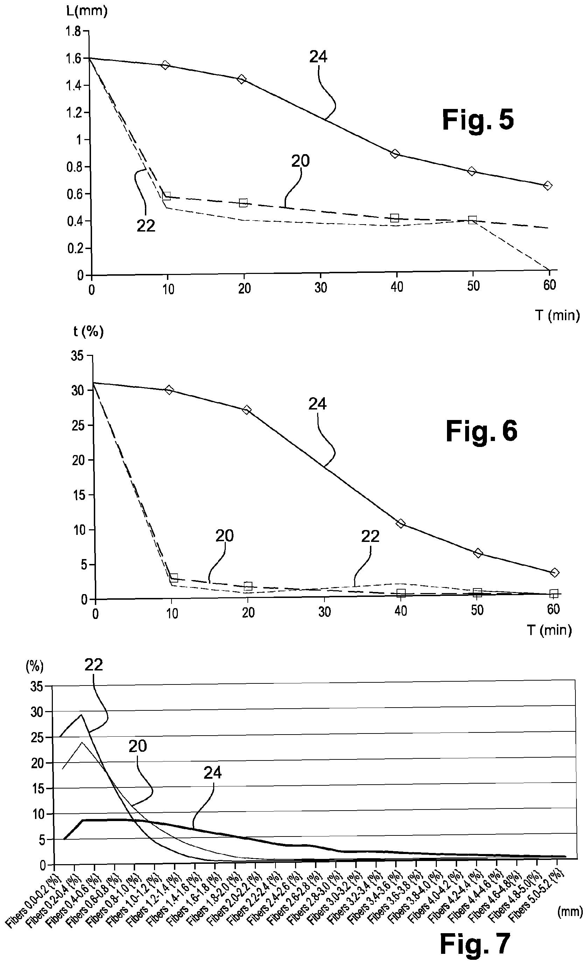

La figure 5 est un graphe représentant l'évolution de la longueur moyenne (L en millimètres) des fibres cellulosiques dans chaque pâte papetière, en fonction du temps de raffinage (T en minutes).

La figure 6 est un graphe représentant l'évolution du taux (t en %) des fibres longues (longueur supérieure à 2mm) dans chaque pâte papetière, en fonction du temps de raffinage (T en minutes).

Les figures 4 à 6 comportent chacune trois courbes, les courbes 20 concernent la première pâte papetière (enzyme à 2ml/kg de fibres), les courbes 22 concernent la seconde pâte (enzyme à 4,7ml/kg de fibres), et les courbes 24 concernent la troisième pâte (sans enzyme).

Le degré SR représente l'indice d'égouttage de la pâte. Plus le degré SR est important et plus la pâte retient l'eau. L'objectif du raffinage est dans cet exemple d'obtenir un degré SR de 17, ce qui correspond à une pâte retenant peu l'eau et donc facilement égouttable.

La figure 4 montre qu'il faut raffiner la troisième pâte (sans enzyme - courbe 24) pendant environ 37 minutes pour obtenir ce degré SR de 17, alors que les première et seconde pâtes contenant des enzymes (courbes 20 et 22) ne doivent être raffinées que pendant une période inférieure à 20 minutes environ pour parvenir à ce degré SR. Autrement dit, l'invention permet de réduire la durée de raffinage d'une pâte pour obtenir un degré SR déterminé.

La figure 5 montre que la longueur moyenne des fibres cellulosiques des pâtes contenant une enzyme (courbes 20 et 22) au bout de 20 minutes de raffinage (respectivement de 0,44 et 0,33mm), est inférieure à celle (0,625mm) de la pâte sans enzyme (courbe 24) au bout de 60 minutes de raffinage.

L'invention permet donc de réduire de manière importante et rapide la longueur moyenne des fibres cellulosiques d'une pâte papetière.

La figure 6 montre qu'un raffinage de 20 minutes suffit à avoir un taux de fibres ayant une longueur supérieure à 2mm inférieur à 1% dans les première et seconde pâtes (courbes 20 et 22), alors qu'il est supérieur à 27% dans le troisième échantillon sans enzyme (courbe 24) pour cette même durée de raffinage.

En conclusion, les figures 4 à 6 montrent qu'un raffinage de 20 minutes des pâtes papetières avec enzyme (courbes 20 et 22) suffit à atteindre le degré SR recherché de 17, ces pâtes raffinées ayant des fibres cellulosiques de longueur moyenne inférieure à 0,5mm et comportant un très faible taux (inférieur à 1 %) de fibres de plus de 2mm de longueur. Un raffinage de 37 minutes de la pâte papetière sans enzyme (courbes 24) est nécessaire pour atteindre le degré SR de 17, cette pâte raffinées ayant des fibres cellulosiques de longueur moyenne supérieure à 0,9mm et comportant un taux relativement important (supérieur à 12%) de fibres de plus de 2mm de longueur.

La figure 7 est un graphe représentant la distribution du taux des fibres de chacune des trois pâtes papetières précitées (%) en fonction de leur longueur (de 0 à 5,2mm), après une durée de raffinage de 20 minutes.

Les courbes 20, 22 et 24 désignent respectivement la distribution précitée pour les première, seconde et troisième pâtes.

La courbe 24 est relativement plane, ce qui signifie que la troisième pâte (sans enzyme) comporte des fibres de toutes tailles (longueur entre 0,1 et 5,2mm) et dans des proportions relativement proches (entre 0,2 et 8%).

Au contraire, les courbes 20 et 22 comportent chacune un pic ou maximum très prononcé et ces courbes s'annulent pour des longueurs de fibres supérieures à 2mm environ. Ceci signifie qu'un raffinage de 20 minutes suffit à couper la plupart des fibres les plus longues d'une pâte papetière comportant des enzymes, et de maximiser le taux des fibres les plus courtes de cette pâte. La première pâte a un taux de 23% environ de fibres ayant une longueur de l'ordre de 0,5mm, et la seconde pâte a un taux de 29% environ de fibres ayant une longueur de l'ordre de 0,5mm.

Les trois pâtes papetières précitées sont utilisées pour fabriquer des papiers qui sont ensuite testés pour évaluer l'influence de l'action enzymatique lors du raffinage des pâtes sur les caractéristiques physiques des papiers. Un papier est fabriqué et testé pour chaque prélèvement précité (toutes les 10 minutes lors du raffinage) effectué dans les différentes pâtes papetières.

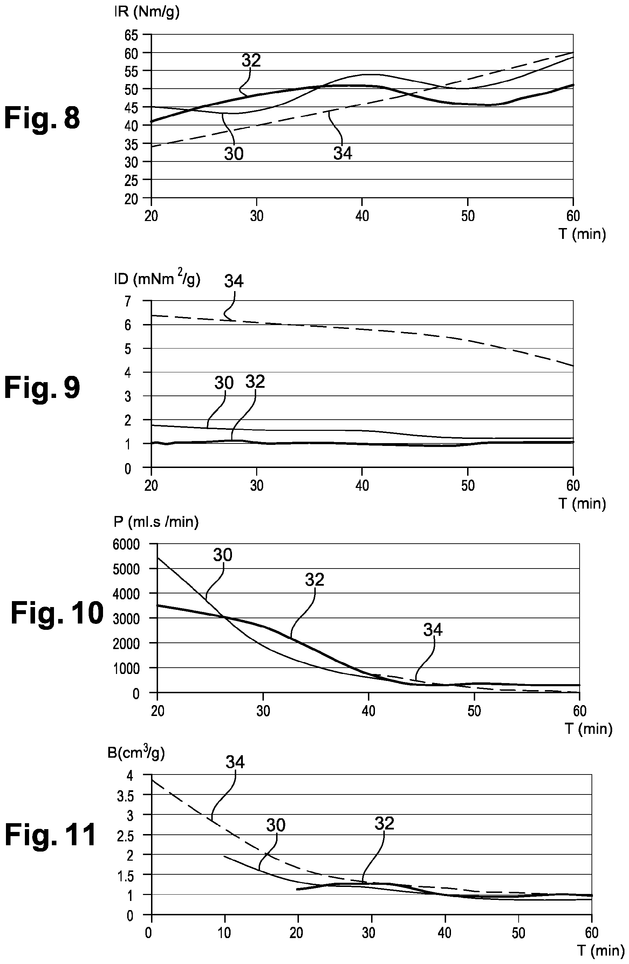

Des mesures de l'indice de rupture, de l'indice de déchirement, de la porosité Bendtsen, et de la main sont effectués pour chaque papier et sont représentées par les figures 8 à 11.

La figure 8 est un graphe représentant l'évolution de l'indice de rupture (IR en Nm/g) de chaque papier, en fonction du temps de raffinage (T en minutes). L'indice de rupture (IR) d'un papier est égal au rapport de sa résistance à la rupture (N/m) sur son grammage (g/m²).

La figure 9 est un graphe représentant l'évolution de l'indice de déchirement (ID en mNm²/g) de chaque papier, en fonction du temps de raffinage (T en minutes). L'indice de déchirement (ID) d'un papier est égal au rapport de sa résistance au déchirement (mN) sur son grammage (g/m²).

La figure 10 est un graphe représentant l'évolution de la porosité Bendtsen (P en ml.s/min) de chaque papier, en fonction du temps de raffinage (T en minutes).

La figure 11 est un graphe représentant l'évolution de la main (B en cm³/g) de chaque papier, en fonction du temps de raffinage (T en minutes).

Les figures 8 à 11 comportent chacune trois courbes, les courbes 30 concernent des papiers préparés à partir de la première pâte papetière précitée (enzyme à 2ml/kg de fibres), les courbes 32 concernent des papiers préparés à partir de la seconde pâte (enzyme à 4,7ml/kg de fibres), et les courbes 34 concernent des papiers préparés à partir de la troisième pâte (sans enzyme).

Les figures 8, 10 et 11 montrent que l'action enzymatique sur les pâtes lors du raffinage a peu d'influence sur les caractéristiques physiques des papiers fabriqués à partir de ces pâtes, car les indices de rupture, les porosité Bendtsen et les mains de ces papiers sont très proches les uns des autres pour une durée de raffinage donnée.

La figure 9 montre au contraire que l'action enzymatique sur une pâte papetière a une forte influence sur l'indice de déchirement du papier préparé à partir de cette pâte. L'indice de déchirement d'un papier est fortement lié à la longueur des fibres qui le composent. Du fait de la réduction importante de la longueur des fibres dans les papiers préparés selon l'invention, leur indice de déchirement est très faible (inférieur ou égal à 2mN.m²/g).

## Revendications

1. Procédé de raffinage en milieu enzymatique d'une pâte papetière comportant des fibres cellulosiques issues de sources autres que le bois ou issues de matière recyclée, cette pâte comportant un taux supérieur à 10% de fibres ayant une longueur supérieure ou égale à 2mm environ, **caractérisé en ce qu'**il comprend les étapes de :
- raffinage de la pâte papetière, en présence d'une solution enzymatique mélangée à la pâte avant le raffinage et/ou pendant le raffinage, active sur lesdites fibres cellulosiques et comprenant une ou plusieurs enzymes hydrolysant la cellulose, de façon à accentuer et/ou accélérer lors du raffinage l'effet de coupe des fibres cellulosiques, en particulier pour réduire la longueur des fibres de plus grande longueur, le raffinage étant réalisé pendant une durée suffisante pour réduire le taux de fibres ayant une longueur supérieure à 2mm à moins de 3% ;
- inhibition de l'action enzymatique dans la pâte papetière en fin de raffinage ou après le raffinage; et
- récupération de la pâte papetière raffinée.

2. Procédé selon la revendication 1, **caractérisé en ce que** les fibres cellulosiques sont issues de plantes annuelles, bi-annuelles, ou récoltées au moins tous les deux ans, ou sont des fibres recyclées ou non vierges, par exemple issues de textiles recyclés tels que des chiffons.

3. Procédé selon la revendication 1 ou 2, **caractérisé en ce que** les fibres cellulosiques sont des fibres de coton, de lin, de chanvre, de riz, de bambou, de bagasse, d'abaca, de sisal, de jute, de paille, de kenaf, d'alpha, de ramie, et/ou de kapok.

4. Procédé selon l'une des revendications précédentes, **caractérisé en ce que** la solution enzymatique comprend une ou plusieurs cellulase(s) ou hémicellulase(s).

5. Procédé selon l'une des revendications précédentes, **caractérisé en ce que** le raffinage est réalisé à une température comprise entre 40 et 80°C.

6. Procédé selon l'une des revendications précédentes, **caractérisé en ce que** la solution enzymatique est ajoutée à la pâte à raison de 0,1 à 10 ml/kg de fibres, la pâte ayant une concentration massique en fibres cellulosiques comprise entre 1 et 10%.

7. Procédé selon l'une des revendications précédentes, **caractérisé en ce que** l'inhibition est réalisée en ajoutant un inhibiteur d'enzyme dans la pâte papetière, cet inhibiteur étant par exemple du type hypochlorite de sodium ou peroxyde d'hydrogène.

8. Procédé selon l'une des revendications précédentes, **caractérisé en ce que** la pâte papetière comprend plus de 30% de fibres ayant une longueur supérieure à 2mm.

9. Procédé selon l'une des revendications précédentes, **caractérisé en ce que**, les fibres cellulosiques étant issues de matière recyclée, le procédé comprend une étape préliminaire de cuisson de la pâte papetière, en particulier sous condition alcaline.

10. Procédé selon l'une des revendications précédentes, **caractérisé en ce que** le procédé comprend une étape préliminaire de préparation ou d'apport de la pâte papetière.

11. Procédé selon l'une des revendications précédentes, **caractérisé en ce que** le raffinage est réalisé pendant une durée suffisante pour réduire la longueur moyenne des fibres à moins de 1 mm, et par exemple à moins de 0,7mm.

12. Procédé selon l'une des revendications précédentes, **caractérisé en ce que** le raffinage est réalisé pendant une durée suffisante pour réduire le taux de fibres ayant une longueur supérieure à 2mm à moins de 1 %.

13. Procédé selon l'une des revendications précédentes, **caractérisé en ce que** le raffinage est réalisé pendant une durée suffisante pour réduire le taux de fibres ayant une longueur supérieure à 3mm à moins de 3%, et par exemple à moins de 1%.

14. Procédé selon l'une des revendications précédentes, **caractérisé en ce que** le raffinage est réalisé pendant une durée comprise entre 10 et 60 minutes, de préférence entre 20 et 40 minutes, plus préférentiellement entre 25 et 35 minutes, et par exemple de 30 minutes environ.

15. Procédé selon l'une des revendications précédentes, **caractérisé en ce que** le raffinage est réalisé au moyen d'un raffineur ayant une charge spécifique de lame supérieure à 1J/m, de préférence supérieur à 2J/m, et plus préférentiellement supérieur ou égal à 3J/m.

16. Procédé selon l'une des revendications précédentes, **caractérisé en ce que**, après raffinage, la pâte papetière a un taux supérieur à 30%, de préférence supérieur à 50%, et plus préférentiellement supérieur à 70%, de fibres ayant une longueur inférieure à 1 mm environ.

17. Procédé de fabrication d'un papier, **caractérisé en ce que** ledit papier est fabriqué à partir d'une pâte papetière raffinée par le procédé selon l'une des revendications précédentes.

18. Procédé de fabrication d'un papier selon la revendication 17, **caractérisé en ce que** le papier est du type papier imprimable ou d'écriture tel qu'un papier fin, du type papier de sécurité par exemple pour billet de banque, du type papier technique par exemple pour support abrasif, ou du type papier d'emballage par exemple alimentaire.

19. Procédé de fabrication d'un papier selon la revendication 17 ou 18, **caractérisé en ce que** le papier a un indice de déchirement inférieur ou égal à 4mN.m²/g.

20. Utilisation d'une pâte papetière raffinée par un procédé selon l'une des revendications 1 à 16 pour la fabrication de papier.

## Patentansprüche

1. Verfahren zum Mahlen von Papierbrei in enzymatischer Umgebung, der Cellulosefasern umfasst, die aus einem anderen Material als Holz gewonnen sind oder die aus recyceltem Material stammen, wobei der Papierbrei einen Faseranteil von über 10 % mit einer Faserlänge von größer oder gleich etwa 2 mm hat,
**dadurch gekennzeichnet, dass** es die folgenden Schritte umfasst:
- Mahlen des Papierbrei in Gegenwart einer dem Papierbrei vor dem und/oder während des Mahlvorgangs beigemengten Enzymlösung, die auf die Cellulosefaser wirkt und ein oder mehrere die Cellulose hydrolysierende Enzyme umfasst, so dass während des Mahlvorgangs die Wirkung der Fraktionierung der Cellulosefasern verstärkt und/oder beschleunigt wird, insbesondere um die Länge der Fasern mit der größten Länge zu reduzieren, wobei der Mahlvorgang über eine Zeit erfolgt, die ausreicht, um den Anteil der Fasern mit einer Länge von über 2 mm bis unter 3 mm zu reduzieren;
- Hemmen der enzymatischen Wirkung im Papierbrei am Ende des Mahlvorgangs oder nach dem Mahlvorgang; und
- Gewinnen des gemahlenen Papierbrei.

2. Verfahren nach Anspruch 1,
**dadurch gekennzeichnet, dass** die Cellulosefasern von einjährigen, zweijährigen oder von wenigstens alle zwei Jahre geernteten Pflanzen stammen oder recycelte oder nicht leere vorkommende Fasern sind, die zum Beispiel von recycelten Faserstoffen wie Lappen stammen.

3. Verfahren nach Anspruch 2 oder 3,
**dadurch gekennzeichnet, dass** es sich bei den Cellulosefasern um Fasern aus Baumwolle, Flachs, Hanf, Reis, Bambus, Bagasse, Abaka, Sisal, Jute, Stroh, Kenaf, Alpha-Cellulose, Ramie und/oder Kapok handelt.

4. Verfahren nach einem der vorhergehenden Ansprüche,
**dadurch gekennzeichnet, dass** die Enzymlösung eine oder mehrere Cellulasen oder Hemicellulasen umfasst.

5. Verfahren nach einem der vorhergehenden Ansprüche,
**dadurch gekennzeichnet, dass** der Mahlvorgang bei einer Temperatur zwischen 40° und 80° C erfolgt.

6. Verfahren nach einem der vorhergehenden Ansprüche,
**dadurch gekennzeichnet, dass** dem Papierbrei die Enzymlösung in einer Menge von 0,1 bis 10 ml/kg Fasern beigemengt wird, wobei der Papierbrei eine Massenkonzentration der Cellulosefasern zwischen 1 und 10 % aufweist.

7. Verfahren nach einem der vorhergehenden Ansprüche,
**dadurch gekennzeichnet, dass** die Hemmung dadurch erfolgt, dass dem Papierbrei ein Enzyminhibitor beigemengt wird, wobei dieser Inhibitor zum Beispiel vom Typ Natriumhypochlorit oder Wasserstoffperoxid ist.

8. Verfahren nach einem der vorhergehenden Ansprüche,
**dadurch gekennzeichnet, dass** der Papierbrei über 30 % Fasern mit einer Länge von über 2 mm aufweist.

9. Verfahren nach einem der vorhergehenden Ansprüche,
**dadurch gekennzeichnet, dass** das Verfahren einen vorbereitenden Schritt zum Kochen des Papierbrei, insbesondere unter alkalischen Bedingungen, umfasst, wenn die Cellulosefasern aus recyceltem Material stammen.

10. Verfahren nach einem der vorhergehenden Ansprüche,
**dadurch gekennzeichnet, dass** das Verfahren einen vorbereitenden Schritt zur Zubereitung oder Zuführung von Papierbrei umfasst.

11. Verfahren nach einem der vorhergehenden Ansprüche,
**dadurch gekennzeichnet, dass** der Mahlvorgang über eine Zeit erfolgt, die ausreicht, um die durchschnittliche Faserlänge auf unter 1 mm, beispielsweise auf unter 0,7 mm zu reduzieren.

12. Verfahren nach einem der vorhergehenden Ansprüche,
**dadurch gekennzeichnet, dass** der Mahlvorgang über eine Zeit erfolgt, die ausreicht, um den Anteil der Fasern mit einer Länge von über 2 mm auf unter 1 % zu reduzieren.

13. Verfahren nach einem der vorhergehenden Ansprüche,
**dadurch gekennzeichnet, dass** der Mahlvorgang über eine Zeit erfolgt, die ausreicht, um den Anteil der Fasern mit einer Länge von über 3 mm auf unter 3 %, zum Beispiel auf unter 1 % zu reduzieren.

14. Verfahren nach einem der vorhergehenden Ansprüche,
**dadurch gekennzeichnet, dass** der Mahlvorgang in einer Zeit von 10 bis 60 Minuten, vorzugsweise zwischen 20 und 40 Minuten, besonders bevorzugt zwischen 25 und 35 Minuten, und zum Beispiel etwa 30 Minuten erfolgt.

15. Verfahren nach einem der vorhergehenden Ansprüche,
**dadurch gekennzeichnet, dass** der Mahlvorgang mittels eines Refiners mit einer spezifischen Kantenbelastung von über 1 J/m, vorzugsweise über 2 J/m und besonders bevorzugt von größer oder gleich 3 J/m erfolgt.

16. Verfahren nach einem der vorhergehenden Ansprüche,
**dadurch gekennzeichnet, dass** nach der Mahlung der Papierbrei eine Faseranteil von über 30 %, vorzugsweise von über 50 % und besonders bevorzugt von über 70 % mit einer Faserlänge von unter etwa 1 mm hat.

17. Verfahren zum Herstellen von Papier,
**dadurch gekennzeichnet, dass** das Papier aus Papierbrei hergestellt wird, der mit dem Verfahren nach einem der vorhergehenden Ansprüche gemahlen wurde.

18. Verfahren zum Herstellen von Papier nach Anspruch 17,
**dadurch gekennzeichnet, dass** es sich um Papier vom Typ bedruckbares Papier oder Schreibpapier, etwa ein Feinpapier, vom Typ Sicherheitspapier, zum Beispiel für Geldscheine, vom Typ technisches Papier, zum Beispiel für Schleifpapier, oder vom Typ Verpackungspapier, zum Beispiel für Lebensmittel handelt.

19. Verfahren zum Herstellen von Papier nach Anspruch 17 oder 18,
**dadurch gekennzeichnet, dass** das Papier einen Weiterreißwiderstand von kleiner oder gleich 4 mN.m²/g hat.

20. Verwendung von Papierbrei, gemahlen mit einem Verfahren nach einem der Ansprüche 1 bis 16 zur Herstellung von Papier.

## Claims

1. Process for refining paper pulp in an enzymatic environment, said pulp comprising cellulose fibres derived from sources other than wood or derived from recycled material, this pulp having a content of greater than 10% of fibres having a length greater than or equal to 2 mm approximately, **characterized in that** it comprises the steps of:
- refining the paper pulp, in the presence of an enzymatic solution mixed with the pulp before the refining and/or during the refining, which is active with respect to said cellulose fibres and which comprises one or more enzymes that hydrolyse the cellulose, so as to accentuate and/or accelerate, during the refining, the effect of cutting the cellulose fibres, in particular to reduce the length of the longer fibres, the refining being carried out for a time sufficient to reduce the content of fibres having a length greater than 2 mm to less than 3%;
- inhibiting the enzymatic action in the paper pulp at the end of the refining or after the refining; and
- recovering the refined paper pulp.

2. Process according to Claim 1, **characterized in that** the cellulose fibres are derived from annual plants, biennial plants, or plants that are harvested at least every two years, or are recycled or non-virgin fibres, for example derived from recycled textiles such as rags.

3. Process according to Claim 1 or 2, **characterized in that** the cellulose fibres are cotton, linen, hemp, rice, bamboo, bagasse, abaca, sisal, jute, straw, kenaf, esparto, ramie and/or kapok fibres.

4. Process according to one of the preceding claims, **characterized in that** the enzymatic solution comprises one or more cellulases or hemicellulases.

5. Process according to one of the preceding claims, **characterized in that** the refining is carried out at a temperature between 40°C and 80°C.

6. Process according to one of the preceding claims, **characterized in that** the enzymatic solution is added to the pulp in a proportion of from 0.1 to 10 ml/kg of fibres, the pulp having a mass concentration of cellulose fibres of between 1% and 10%.

7. Process according to one of the preceding claims, **characterized in that** the inhibition is carried out by adding an enzyme inhibitor to the paper pulp, this inhibitor being for example of sodium hypochlorite or hydrogen peroxide type.

8. Process according to one of the preceding claims, **characterized in that** the paper pulp comprises more than 30% of fibres having a length of greater than 2 mm.

9. Process according to one of the preceding claims, **characterized in that**, when the cellulose fibres are derived from recycled material, the process comprises a preliminary step of cooking the paper pulp, in particular under alkaline conditions.

10. Process according to one of the preceding claims, **characterized in that** the process comprises a preliminary step of preparing or supplying the paper pulp.

11. Process according to one of the preceding claims, **characterized in that** the refining is carried out for a period of time sufficient to reduce the mean length of the fibres to less than 1 mm, and for example to less than 0.7 mm.

12. Process according to one of the preceding claims, **characterized in that** the refining is carried out for a period of time sufficient to reduce the content of fibres having a length greater than 2 mm to less than 1%.

13. Process according to one of the preceding claims, **characterized in that** the refining is carried out for a period of time sufficient to reduce the content of fibres having a length greater than 3 mm to less than 3%, and for example to less than 1%.

14. Process according to one of the preceding claims, **characterized in that** the refining is carried out for a period of between 10 and 60 minutes, preferably between 20 and 40 minutes, more preferably between 25 and 35 minutes, and for example of around 30 minutes.

15. Process according to one of the preceding claims, **characterized in that** the refining is carried out using a refiner having a specific edge load of greater than 1 J/m, preferably greater than 2 J/m, and more preferably greater than or equal to 3 J/m.

16. Process according to one of the preceding claims, **characterized in that**, after refining, the paper pulp has a content of greater than 30%, preferably greater than 50%, and more preferably greater than 70%, of fibres having a length of less than 1 mm approximately.

17. Process for manufacturing a paper, **characterized in that** said paper is manufactured from paper pulp refined by the process according to one of the preceding claims.

18. Process for manufacturing a paper according to Claim 17, **characterized in that** the paper is of printable paper or writing paper type such as a fine paper, of security paper type, for example for a banknote, of technical paper type, for example for an abrasive support, or of packaging paper type, for example food packaging paper.

19. Process for manufacturing a paper according to Claim 17 or 18, **characterized in that** the paper has a tear factor of less than or equal to 4 mN.m²/g.

20. Use of paper pulp refined by a process according to one of Claims 1 to 16 for the manufacture of paper.
